# EUROPEAN PATENT SPECIFICATION

(11) **EP 4 104 960 B1**
(45) Date of publication and mention of the grant of the patent: **05.11.2025**
(21) Application number: 21179759.2
(22) Date of filing: 16.06.2021
(51) Int. Cl.: B23K 9/02, B23K 9/028, B23K 9/12, B23K 9/18, B23K 37/02, B23K 9/173

(54) **WELDING TORCH ASSEMBLY**
SCHWEISSBRENNERANORDNUNG
ENSEMBLE DE CHALUMEAU SOUDEUR

(43) Date of publication of application: 21.12.2022
(73) Proprietor: Sif Holding N.V., 6041 TA Roermond (NL)
(72) Inventor: LAFLEUR, Wilhelmus Elisabeth, 6041 TA Roermond (NL)
(74) Representative: Nederlandsch Octrooibureau

(56) References cited:
- EP-A1- 3 505 288
- FR-A1- 3 008 635
- US-A- 5 146 064
- "METAL-POWDER TWIN-WIRE SUBMERGED-ARC WELDING", WELDING AND METAL FABRICATION, IPC LTD. HAYWARDS HEATH, GB, vol. 66, no. 7, 1 August 1998 (1998-08-01), XP000777417, ISSN: 0043-2245

## Description

### Field of the invention

The present invention relates to a welding torch assembly for a welding device.

### Background art

A known welding torch assembly includes a welding torch, into which two wires are fed through to form two electrodes that are used to generate a welding arc for the deposition of molten metal in a narrow gap between two metal parts, in order to join the metal parts together.

The welding torch assembly can be used for welding large cylindrical, conical or tubular structures, such as shells for assembling piles. The piles can be used in, for example, oil and gas platforms or wind turbines.

A shell can be formed by rolling a steel plate into a curved shape and welding the ends of the rolled plate together to form a cylindrical or conical shape. Typically, the diameter of the shell is 8 meters (m) and the length of the shell is between 2 to 4 m, and the thickness of the steel plates of the shell is typically between 60 and 120 millimetres (mm). By adjusting the rolling, it is possible to weld the steel plates to form shells of varying sizes.

In order to produce a weld between the steel plates, each plate is fabricated with grooves on the connecting side of the plate. The grooves allow the welding torch to gradually deposit welding material along the thickness of the plate, welding the ends of the rolled plate together to form the shell.

In order to obtain welds of good quality, the welding torch must be positioned close to the welding material deposited at the inside of the groove. For thick plates, the groove is also deep, wherein the weld material deposited in the valley of the groove. The groove opening must be sufficiently large to accommodate the welding torch in order for the welding torch to be positioned close to the deposited welding material inside the groove. Since the groove must be able to accommodate the weld torch, more welding must be performed - using more weld material - in the groove, which may lead to inaccurate welding resulting in a low quality weld.

Such a welding device is known from EP3505288.

### Summary of the invention

It is an object of the invention to provide a welding torch assembly for a welding device for narrow-gap welding that enables more efficient welding of the shells. This object is achieved by the welding torch assembly in accordance with the present invention, the welding torch assembly comprising a frame, a proximal part, coupled to the frame, comprising an electrode wire feeder, a welding torch, a distal part, comprising a welding torch holder, the welding torch holder configured to hold the welding torch to the distal part, a hinge for moveably coupling the distal part to the proximal part; an actuator coupled to the distal part and the proximal part configured to move the distal part of the welding torch assembly with respect to the proximal part, a controller arranged to control the actuator to move the distal part in a groove through two metal sheets,
wherein the electrode wire feeder is configured to feed at least two electrode wires to the welding torch through the welding torch holder, and the welding torch is configured to weld a groove, connecting two metal sheets, when a current is applied through at least some of the two or more electrode wires fed to the welding torch. In this assembly, the welding torch in the welding torch assembly is movable, allowing for a more precise orientation within the groove and reduction of material for filling the groove weld/seal. Furthermore, the distal end can be more compact. This allows for an assembly that may be configured to perform movement in smaller increments.

In a further embodiment, the proximal part comprises a connecting bar and the distal part comprises an axial thread, wherein the hinge comprises a barrel section mounted on the connecting bar and a pivot configured to rotate the axial thread. This arrangement allows the distal part to move with respect to the proximal part, which is fixed onto the frame of the welding torch assembly. This assembly allows the welding torch, in the distal part of the welding torch assembly, to freely move inside the groove, allowing for a more improved manoeuvrability of the welding torch between the two metal plates. This allows for a more accurate milling along the thickness of the metal plates.

According to the invention, the torch assembly further comprises a controller arranged to control the actuator to move the distal part in the groove between the two metal sheets. This arrangement allows welding torches to be able to be electronically controlled. Furthermore, this allows the controller to set the incremental movement of the welding torches in the groove, allowing for further fine-tuning of the movement of the welding torches.

In an advantageous embodiment, the welding torch is further configured to hold a second welding torch to the distal part, the electrode wire feeder is further configured to feed at least two electrode wires to the second welding torch through the welding torch holder, and the second welding torch is configured to weld the groove, connecting the two metal sheets, when a current is applied through at least some of the at least two electrode wires of the second welding torch. By being able to weld two separate locations simultaneously, it is possible to mill more efficiently inside the groove by, for example, being able to apply two welding torches along the same melting path, or welding at two separate layers inside the groove.

In a further embodiment, the welding torch holder comprises a block-like body for positioning the first and the second welding torches apart by a predetermined distance. By comprising of a block-like structure, it is possible to customize position - and thereby the spacing - of the two welding torches through the insertion or replacement of blocks, without the need for manufacturing different welding torch holders for holding the welding torches in different positions.

In an advantageous embodiment, the welding torch holder is further configured to hold a welding powder distributor, configured to deposit welding powder, between the first and second welding torches. In this assembly, if the first welding torch exhausts the molten metal supply available in the groove, the welding powder distributor is able to deposit welding powder between the welding torches and replenishing the molten metal supply in the groove and allowing the second welding torch to maintain its welding operation. In a further embodiment, the welding powder distributor is connected to a powder container configured to transport weld powder to the welding powder distributor. This allows for the weld powder to be supplied to the welding torches without the need to manually introduce additional weld powder into the melting path in the groove.

In a further embodiment, the welding powder distributor is connected to a powder container configured to transport weld powder to the welding powder distributor. In this assembly, the welding powder distributor is connected to a powder container to supply the groove with weld powder.

In a further embodiment, the first and the second welding torches are coupled onto the welding torch holder at different angles. This assembly allows for different configurations of welding operations to be performed by the welding torches, while maintaining a melting path.

In a further embodiment, the first and the second welding torches are aligned in series. This assembly allows for welding along the thickness of the plate while maintaining a melting path.

In a further embodiment an alternating current, AC, is applied to the first welding torch, and a direct current, DC is applied to the second welding torch. This allows for one of the welding torches to perform DC welding whilst allowing for the other welding torch to perform AC welding to avoid mutual forces of the magnetic fields due to the DC currents on the welding torches. This assembly in the welding torch holder prevents unwanted short circuiting or electrical arcing between the welding torches.

In a further embodiment, the welding torch holder, the first welding torch and the second welding torch is partially covered with at least one non-magnetic insulation panel. This assembly prevents unwanted short circuiting and arcing of the welding torch holder.

In a further embodiment, the welding torch comprises a block-like body provided with two-parallel channels in a longitudinal direction of the block-like body for guiding the electrode wires through the block-like body. This assembly of the welding torch prevents unwanted short circuiting and/or arcing inside the welding torch by keeping the electrode wires apart from each other until they are required for the welding process.

The invention further provides a welding device comprising a welding torch assembly according to any of the claims 1 to 10 and a method for welding using a welding torch assembly according to any of the claims 1-10 or a welding device according to claim 11.

### Brief description of the drawings

The present invention will be discussed in more detail below, with reference to the attached drawings, in which:
Fig. 1 depicts a welding device.
Fig. 2 depicts a cross section of a partially welded joint.
Fig. 3a depicts a cross section of a welding torch.
Fig. 3b depicts a side view of a welding torch.
Fig. 3c depicts a side view of a welding torch.
Fig. 4 depicts a welding torch assembly.
Fig. 5a depicts a side view of a hinge connecting proximal and distal parts of a welding torch assembly.
Fig 5b depicts a front view of a hinge connecting proximal and distal parts of a welding torch assembly.
Fig. 6a depicts a front view of angled welding torches.
Fig. 6c depicts a side view of angled welding torches.
Fig. 7 depicts a welding powder distributor for a welding torch assembly.
Fig. 8 depicts a non-magnetic insulation material on the surface of a distal part of a welding torch assembly.

### Description of embodiments

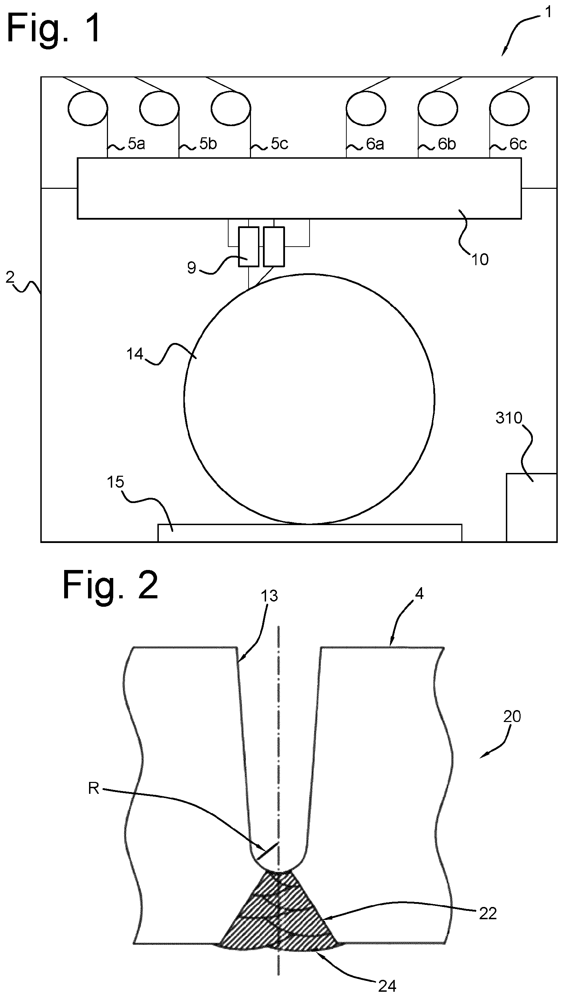

The welding torch assembly is described with reference to Figures 1 - 8. In the figures like reference signs indicate like parts.

The welding torch assembly can be used for welding large cylindrical, conical or tubular structures, such as shells for assembling piles for wind generators and for offshore platforms. Typically, the diameter of the shell is 8 meters (m) and the length of the shell is between 2 to 4 m, and the thickness of the steel plates of the shell is typically between 60 and 120 millimetres (mm).

A shell can be formed by rolling a steel plate into a curved shape and welding the ends of the rolled plate together to form a cylindrical or conical shape. By adjusting the rolling, it is possible to weld the steel plates to form shells of varying sizes.

After the shell formed, two grooves are milled on the side of the steel plate that will be welded - one groove on the inside of the shell, and one groove on the outside of the shell. Firstly, the welding is performed on the groove inside of the shell. Thereafter, the welding is performed on the groove outside of the shell using the welding device as described with reference to Figure 1.

Figure 1 shows a welding device 1 for welding a groove on a shell 14. The welding device 1 comprises a frame 2, a welding torch assembly 10, and electrode wire turntables for providing electrode wires 5a, 5b, 5c, 6a, 6b, 6c to the welding torch assembly 10. The welding device 1 further comprises a transport device 15 for moving the shell 14.

The welding torch assembly 10 comprises an electrode wire feeder that receives the electrode wires 5a, 5b, 5c, 6a, 6b, 6c from the electrode wire turntables and a welding torch holder. The electrode wires are then fed through the welding torch holder, to the welding torch 9. The welding torch is mounted onto the welding torch holder.

The welding torch holder is configured to hold at least one welding torch 9. When more welding torches are attached to the welding torch holder, a body may be placed between the welding torches to keep the torches apart. Furthermore, the welding torch holder may be arranged to hold the welding torches at different angles.

Furthermore, the welding device is provided with a controller 310. The controller 310 is arranged to feed the electrode wires 5a, 5b, 5c, 6a, 6b, 6c from the electrode wire turntables to the electrode wire feeders in the welding torch assembly 10 at a transport speed of the electrode wires is between 2 - 10 m/min, preferably 3 - 6 m/min, more preferably about 4 m/min.

Furthermore, the welding torch assembly is provided with power sources (not shown) which can be programmed to provide an alternating current (AC), a direct current (DC) or both currents through the welding torches and the shell, where the shell acts as the ground to the two currents. The welding currents can range between 600 to 900A for DC welding and in the range between 700 to 950 A for AC welding. In order to prevent unwanted mutual forces (e.g. short circuits), when an DC is applied to a first welding torch, a AC current is applied to any other welding torches in the welding torch holder.

In general, the welding of the shell 14 is performed such that the grooves are asymmetrically positioned with respect to the centre of the steel plate in such a way that the groove at the inner side is less deep than the groove at the outer side of the shell.

Figure 2 shows schematically a cross-section of a partly welded joint 20 in the shell 14. Figure 2 shows a first welded groove 22 and the second non welded groove or gap 13. In this embodiment, the thickness of the steel plate of the shell is 20mm - 120mm, preferably 40 - 100mm, most preferably 80mm and the first welded groove 22 has a depth of 10mm - 30mm, preferably 20mm and the second non-welded groove 13 has a depth of 50 - 100mm, preferably 60 - 80mm, most preferably 65mm. The joints can be any type of joint, for example, a V-joint or a U-joint. The inner joint may be a V joint, whereas the outer joint may be a U-joint. Both joints can be positioned on the same edge and thereby forming, for example, a single V, single U joint type.

The welding process is first performed on the inner surface of the steel plate. The welding of the two edges of the inner surface is performed at the first weld groove 22.

Weld material is deposited at one edge of the valley of the weld groove 22. A welding torch then applies an electric current across the weld material in order to generate a weld layer. Then, weld material is deposited at the opposite edge of the groove, and the welding torch generates a new weld layer. To deposit weld material at the opposite edge, the welding torch is tilted inside the groove. This new weld layer overlaps with the previously generated weld layer. This process is repeated until the groove is filled with stacked overlapping weld layers 24. So, the welding torch is repeatedly tilted inside the groove, such that the overlapping weld layers 24 may be alternatingly stacked on a left flank and a right flank of the weld groove 22. In other words, the rotational motion of the welding torch 9 is transverse to the direction of the groove 22. This allows the welding torch 9 to move from side wall to side wall along the groove 22 during the welding process.

The second welding process is performed on the second weld groove 13. In order for the weld torch to fit inside the weld groove 13, the weld groove must be angled such that the side walls of the groove 13 converges to a trough at the bottom of the groove. For example in the second (non-)welded groove 13 the angle between a side wall and the normal on the plate is for example 4° and the radius R of the bottom part of the second non-welded groove or gap 13 is 7 mm. In another example the angle between the side wall and the normal on the plate is 6.5° and the radius R of the bottom part of the second non-welded groove or gap 13 is 8 mm.

In order to weld the gap 13 of the joint, the welding torches 11, 12 should initially be positioned close to the bottom in the gap 13.

Similarly to the first welding process, the welding is performed by welding layers of electrode material on top of each other. For applying the subsequent layers the welding torches are moved upwards out of the groove 13.. The small dimension of the welding torch enables a smaller gap than conventionally is used. So, less metal should be milled away to form the gap 13 in the plate or shell. The welding torches according to this description can be advantageously applied in the field of narrow-gap welding.

A further advantage is that the reduced gap dimension can provide a reduction in design thickness of the wall of the shell, to obtain a shell having an equal strength compared to the strength of a shell welded by a conventional welding torch.

Preferably, the electrode wires 5a, 5b, 5c, 6a, 6b, 6c have a width of 2.5 mm. Electrode wires with a width of 2.5 mm are narrower than conventional electrode wires, which have a width of 4 mm. Narrow electrode wires take up less space and allow for further reduction of gap dimension.

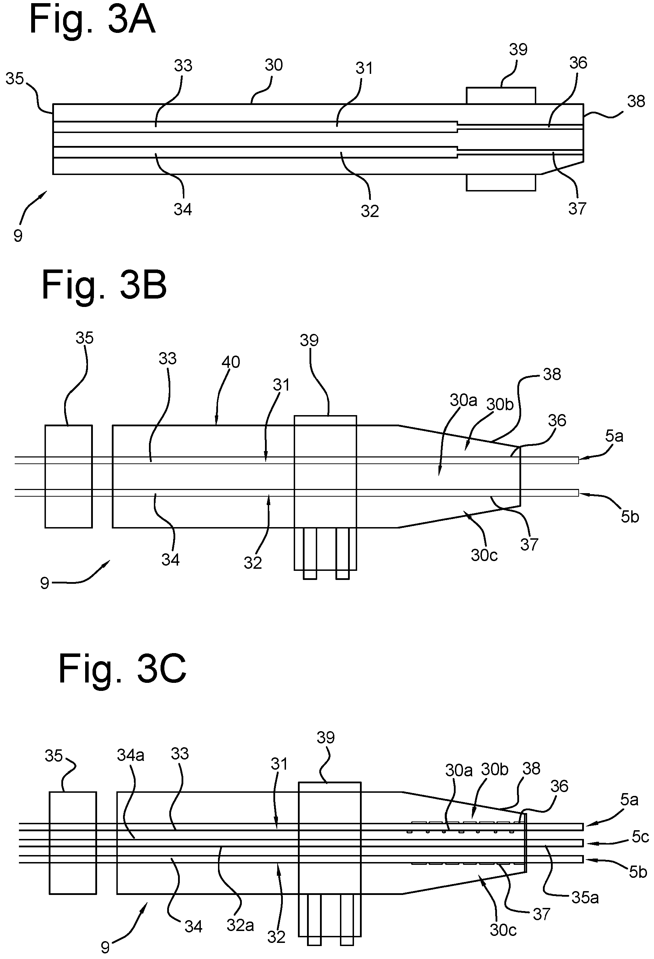

Figure. 3a shows schematically a cross-section of a welding torch 9 that can be applied in the welding device. Figure 3a shows one of two elongated parts 30 forming a block-like body provided with two parallel channels 31, 32 in a longitudinal direction. Furthermore, the elongated part is provided with the parallel grooves in the longitudinal direction such that when the elongated first and second parts are connected the channels 31, 32 are formed. The channels 31, 32 are configured to guide electrode wires 5a, 5b through the block-like body. The elongated part 30 depicted in Figure 3a comprises two parallel grooves such that two parallel channels 31, 32 may be formed. So, the welding torch 9 depicted in Figure 3a can be used for welding with two electrode wires 5a, 5b. Each channel has a first part 33, 34 at the entry side 35 and a second part 36, 37 at the outlet side 38. The second parts 36, 37 of the channels 31, 32 have a slightly smaller diameter than the diameter of the first parts 33, 34 of the channels 31, 32. The diameter of the second part 35, 36 of the channel 31, 32 is such that it tightly fits around the electrode wires 5a, 5b for forming an electrical contact for conducting an electric welding current to the electrode wires 5a, 5b.

Figure 3a further shows that the welding torch 9 comprises a spring loaded device 39 configured to hold the two elongated parts 30 together. When held together by the spring loaded device 39, the two elongated parts 30 form the welding torch 9.

The spring loaded device shown in Figure 3a may be provided with two spring plungers adjustably mounted in holes in the spring loaded device 39, and the spring plungers may be positioned in the spring loaded device 39 such that in an assembled state the respective spring plungers are positioned above the respective channels 31, 32 near the outlet side 38 of the elongated part 30 for exerting a pressing force on the electrode wires. An advantage of these spring plungers is that the force on each of the channels 31, 32 can be separately adjusted to provide an optimal electrical contact between the respective channels and the electrode wires 5a, 5b.

Figure 3b shows schematically a side view of a welding torch 9 that can be applied in the welding device 10. Fig. 3b shows a block-like body 40 provided with two parallel channels 31, 32 in a longitudinal direction of the block-body 40. So, the welding torch 9 depicted in Figure 3b can be used for welding with two electrode wires 5a, 5b.Furthermore, the block-like body 40 comprises three elongated parts 30a, 30b, 30c.

The first elongated part 30a is provided with a first groove at a first side in the longitudinal direction and a second groove at an opposite side in the longitudinal direction and parallel to the first groove. The second elongated part 30b is provided with a third groove in the longitudinal direction at a first side of the second elongated part such that when the elongated first and second parts are connected the channel 31 is formed. Furthermore, the third elongated part 30c is provided with a fourth groove in the longitudinal direction at a first side of the third elongated part such that when the elongated first and third parts are connected the channel 32 is formed. The channels 31, 32 guide respective electrode wires 5a, 5b through the block-like body 40.

Each channel 31, 32 has a first part 33, 34 at an entry side 35 and a second part 36, 37 at an outlet side 38. The second parts 36, 37 of the channels 31, 32 have a slightly smaller diameter than the diameter of the first parts 33, 34 of the channels 31, 32. The diameter of the second parts 36, 37 of the channel 31, 32 is such that they tightly fit around the electrode wires 5a, 5b for forming an electrical contact for conducting an electric welding current to the electrode wires 5a, 5b.

Figure 3b further shows that the welding torch comprises a spring loaded device 39 configured to hold to the first, second and third elongated parts 30a, 30b, 30c together. The spring loaded device 39 is provided with two spring plungers. The spring plungers are adjustably mounted in the holes in the spring loaded device 39, such that in an assembled state, both spring plungers are directed to the centre line of the channels 31, 32 of the welding torch 9 for exerting a pressing force on the electrode wires 5a, 5b. In this arrangement the spring loaded device 39 provides a sufficient and directional constant contact pressure and cross-sectional area for conducting the electrode currents through the electrode wires.

Figure 3c shows schematically a side view of a welding torch 9 that can be applied in the welding device 10. Figure 3c shows that the welding torch 9 is provided with three parallel channels 31, 32, 32a in a longitudinal direction of the welding torch 9. The welding torch 9 comprises three elongated parts 30a, 30b, 30c. The first elongated part 30a is provided with a first groove at a first side in the longitudinal direction and a second groove at an opposite side in the longitudinal direction and parallel to the first groove. The second elongated part 30b is provided with a third groove in the longitudinal direction at a first side of the second elongated part such that when the elongated first and second parts are connected the channel 31 is formed. Furthermore, the third elongated part 30c is provided with a fourth groove in the longitudinal direction at a first side of the third elongated part such that when the elongated first and third parts are connected the channel 32 is formed. The channels 31, 32 guide the respective electrode wires 5a, 5b through the welding torch 9. Furthermore, the first elongated part 30a is provided with the third channel 32a parallel with first and second grooves through the center of the first elongated part. The third channel 32a guides the electrode wire 5c through the welding torch 9.

So, the welding torch 9 depicted in Figure 3c can be used for welding with three electrode wires 5a, 5b, 5c. Advantageously, the third electrode wire 5c is a cold wire. A cold wire is a wire that is melted by the excess heat of the electrode wires, which is not required anymore to melt the other two electrodes. So, instead of melting the third electrode wire 5c by applying a current to melt the third electrode wire 5c, the third electrode wire 5c is melted using excess heat from the other two electrodes. The third channel 32a for guiding the cold wire 5c can be electrically insulated from the first and second channels 31, 32. The cold wire 5c can be guided through the third channel 32a and is then electrically insulated from the first and second channels 31, 32.

Using a cold wire may lead to an increase in welding productivity, without additional power consumption. Compared to the use of a third electrode wire through which a current flows, the total current for a welding torch with two electrode wires through which a current flows and one cold wire is lower. A lower total current through the welding torch may contribute to a higher durability of the welding torch. Moreover, the use of a cold wire contributes to cooling down the melting bath at the bottom of the gap. Cooling down the melting bath at the bottom of the gap may improve heat control during operation, allowing for a further reduction of the gap dimension.

Each channel 31, 32, 32a has a first part 33, 34, 34a at the entry side 35 and a second part 36, 37, 37a at the outlet side 38. The second parts 36, 37, 37a of the channels 31, 32, 32a have a slightly smaller diameter than the diameter of the first parts 33, 34, 34a of the channels 31, 32, 32a. The diameter of the second parts 36, 37 of the channels 32, 33 is such that they tightly fit around the electrode wires 5a, 5b for forming an electrical contact for conducting an electric welding current to the electrode wires 5a, 5b.

Furthermore, the welding torch 30 is provided with a spring loaded device 39 configured to hold to the first, second and third elongated parts 30a, 30b, 30c together. The spring loaded device 39 is provided with two spring plungers. The spring plungers are adjustably mounted in the holes in the spring loaded device 39, such that in an assembled state, both spring plungers are directed to the centre line of the channels 31, 32 of the welding torch for exerting a pressing force on the electrode wires 5a, 5b. In this arrangement the spring loaded device 39 provides a sufficient and directional constant contact pressure and cross-sectional area for conducting the electrode currents through the electrode wires 5a, 5b.

It should be remarked that the welding torches described with reference to Figures 3a-3c are merely exemplary. Additionally or alternatively, different kinds of welding torches 9 may be used in the welding device 10. If multiple welding torches are used in the welding device 10, these welding torches 9 are preferably the same, but it is also possible that some or all of these welding torches 9 are different from eachother.

Figures 3a and 3b show a welding torch with two electrode wires. Figure 3c show a welding torch with three electrode wires, one of which is a cold wire. It should be remarked that welding torches with different numbers of electrode wires and/or cold wires are also possible. Also, different kinds of welding torches with two or three electrode wires are possible. Furthermore, although it is beneficial to use a welding torch with a cold wire, it is also possible to use a welding torch with three or more electrode wires, but without a cold wire.

In the exemplary welding torches depicted in Figures 3a-3c, the elongated parts 30, 30a, 30b, 30c can be made of, for example, a precipitation hardened CuCrZr alloy (Elmedur X) with excellent thermal conductivity. The spring loaded device 39 may comprise an electrically insulating material, such as polyether-ether-ketone, a ceramic material or aluminium oxide. This prevents unwanted short circuits. A portion of the welding torches, preferably a portion of the elongated parts 36, 37, 37a at the outlet side 38, can be provided with an electrically insulating layer, such as polyether-ether-ketone, a ceramic layer or aluminumoxide to prevent unwished electrical contacts with the shell 14. The electrically insulating layer may comprise a non-magnetic insulation panel.

Optionally, the spring loaded device 39 and the electrically insulating layer may be provided as a single piece. In this case, polyether-ether-ketone is a particularly beneficial material to use, because polyether-ether-ketone is a non-magnetic electrical insulator that is relatively easy to manufacture in a desired shape.

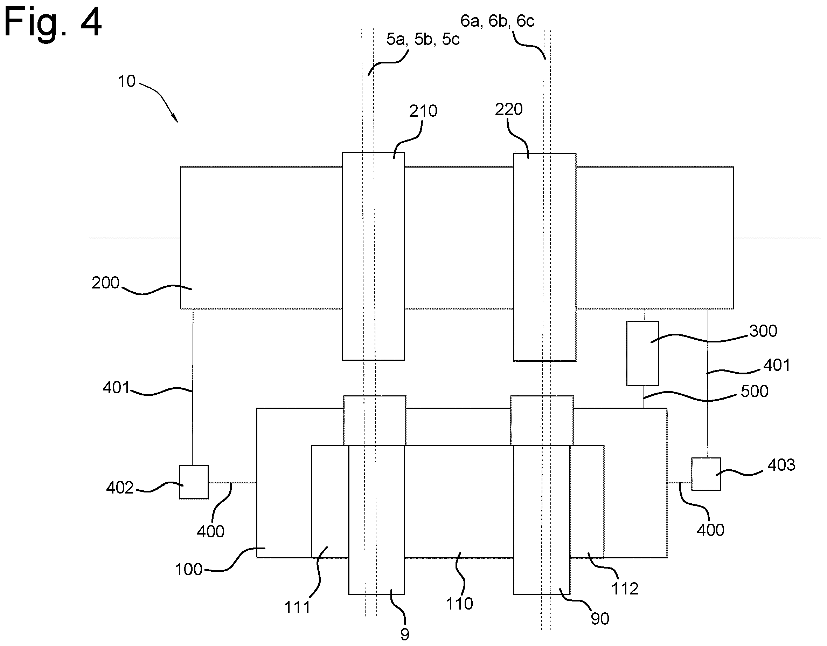

Figure. 4 shows the welding torch assembly 10 of Figure. 1. The welding torch assembly further comprises a frame 2, a proximal part 100, a distal part 200, and an actuator 300 connected to the proximal and distal parts. The proximal part 100 is movably coupled to the distal part 200 by a hinge 402. In a further embodiment, the proximal and distal parts may be connected by additional hinges 403. The proximal part 200 is coupled to the frame 2, and comprises an electrode wire feeder 210, 220 that receives the electrode wires 5, 6 from the electrode wire turntables. The electrode wires 5, 6 are then fed through to the distal part 100 of the welding torch assembly 10. The electrode wires are then fed through the welding torch holder 110 in the distal part 100, to the welding torch 9, 90. Furthermore, the distal part comprises a welding torch holder 110. The welding torch is held onto the distal part by the welding torch holder 110.

In order to accommodate at least one welding torch to the distal part 100, the welding torch holder 110 comprises blocks 111 and 112. The blocks 111 and 112 are designed to accommodate a welding torch 9. By comprising of a block-like structure, it is possible to customize position of the two welding torches through the insertion or replacement of blocks 111, 112, without the need for manufacturing different welding torch holders for holding the welding torches in different positions.

An actuator 300, is connected to the proximal and distal parts of the welding torch assembly through a connection rod 500. The connection rod 500 is fixed at both ends, where one end is fixed to the proximal part 200 and the other end is connected to the distal part 100. When the actuator 300 is in operation, the actuator 300 moves the connection rod 500. As the distal and proximal parts are coupled to the connection rod 500, and the proximal part is coupled to the frame, the movement of the connection rod 500 displaces the distal part 100, thereby moving the distal part 100 of the welding torch assembly. The hinges 402, 403 coupled to the distal part 100 allows the actuator 300 to rotationally displace the distal part 100, i.e. the distal part 100 rotates due to the operation of the actuator 300. The actuator 300 may further be connected to a controller configured to control the actuator.

The coupling between the distal part 100 and the proximal part 200 is done by using the hinge 402 or a rotating joint. This allows only the distal part 100 to move independently from the proximal part 100. The hinge 402 can be fixed onto the distal part 100 using the axial thread 400, but can also be fixed onto the proximal part 200 using a connecting bar 401. The hinge is coupled to at least one side of the distal part 100. Preferably, two hinges 402, 403 are used, fixed at opposite sides of the distal part 100, for rotational stability between the proximal and distal parts. The hinges 402, 403 at the distal part 100 are connected to the connecting bar 401 from the proximal part 200.

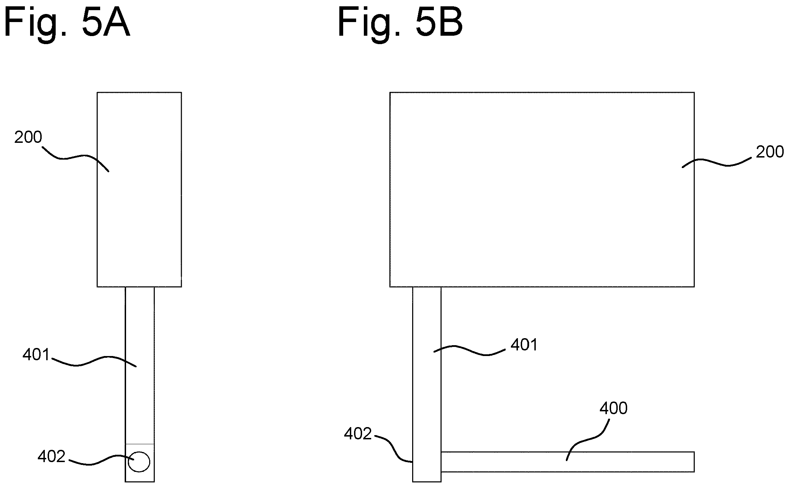

Figure 5 shows the hinge 402 of Figure 4. Figure 5a shows the side view of the hinge system, with respect to the surface of the welding torch assembly, and Figure 5b shows the front view of the hinge system. The hinge 402 comprises a barrel section mounted on the connecting bar 401 of the proximal part 200. The hinge 402 comprises an opening, or a pivot, to allow the axial thread 400, connected to the distal part 100, to freely rotate around the pivot. Preferably, the axial thread is cylindrical such that the thread can be easily rotated around its axis to move the distal part 100.

The pivot of the hinge 402 may be an opening for the axial thread 400 to rotate in, or may be configured to restrict the rotation of the axial thread 400 such that the rotation is only performed incrementally. Furthermore, the rotation may be controlled by the actuator 300.

In another embodiment of the present invention, the hinges can be positioned between the distal part and the proximal part. This has the advantage of maintaining the width, as adding hinges at the sides of the distal part results in a wider distal part. The hinges, however, must be positioned in a manner where it does not impede the supply of electrode wires to the welding torch.

The rotational motion of the distal part is transverse to the direction of the groove. This allows the distal part to move from side wall to side wall along the groove during the welding process.

In another embodiment, more than one hinge is used to stabilize the motion of the distal part in the groove. For example, the intervals that the hinge is able to rotate are finer, or more hinges can be used to stabilize and reduce the incremental intervals of rotation. This allows for a finer positioning of the welding torch, resulting in an accurate placement of the weld inside the groove.

Furthermore, when the welding torch holder 110 comprises of more than one welding torch, 9, 90 both torches at the distal part may be rotationally movable with respect to the proximal part as shown in Figure 4. Furthermore, the welding torch assembly may be configured to independently rotate the two welding torches by using separate hinges.

The controller 310, as shown in Figure 1, is arranged to control the actuator 300 to move the distal part of the welding torch inside the groove through in the sidewall. By only moving the distal part, and not moving the remaining components of the welding torch assembly, the turning point of the welding device is brought lower and the total weight of the moving parts is decreased. Because of this, the welding torches may be moved at smaller and finer increments. This may result in an increased accuracy in the melt paths in the grooves due to the better positioning of the welding torch inside the groove.

The controller 310 is further arranged to control the actuator 300 and the transport device 15 such that the distal part of the welding torch assembly 10 tracks a pre-determined path. It is important to track a pre-determined path, instead of tracking the welding groove 13. This is because the shell 14 may drift during the welding operation, or there may be imperfections in the welding groove 13. Tracking a pre-determined path, instead of tracking the welding groove 13, has the advantage that imperfections in the welds may be avoided.

Another benefit of tracking a predetermined path using the controller 310, is that direct contact between the welding torch assembly 10 and the shell 14 can be avoided. Avoiding direct contact between the welding torch assembly 10 and the shell 14 mitigates the risk of electric currents flowing from the welding torch assembly 10 into the shell 14.

Another advantageous effect of the present invention is that, due to fewer components being in motion during the operation of the welding torch assembly, there is less wear and tear on the equipment. Since the only moving component of the welding torch assembly is the distal part, only the distal part may be inspected during maintenance, thereby reducing the costs of the overall operation.

Another advantageous effect of the present invention is that the non-moving components of the welding assembly 2, such as the proximal part 200, can perform checks (such as diagnostic checks) while still in operation. Previously, the proximal part was also moving, making the checking of the components of the proximal part to also be in motion. This may lead to inaccurate diagnostic checks of said components.

In an embodiment of the present invention, the welding torch assembly comprises a second welding torch 90. The second welding torch 90 is configured to weld, using weld material in the groove, at the same time the first welding torch 9 is welding in the groove. The first and second welding torches may be configured to weld the same melting path, or separate melting paths, and produce separate stacked layers. Using a second welding torch greatly reduces the time taken to weld the grooves between the steel plates.

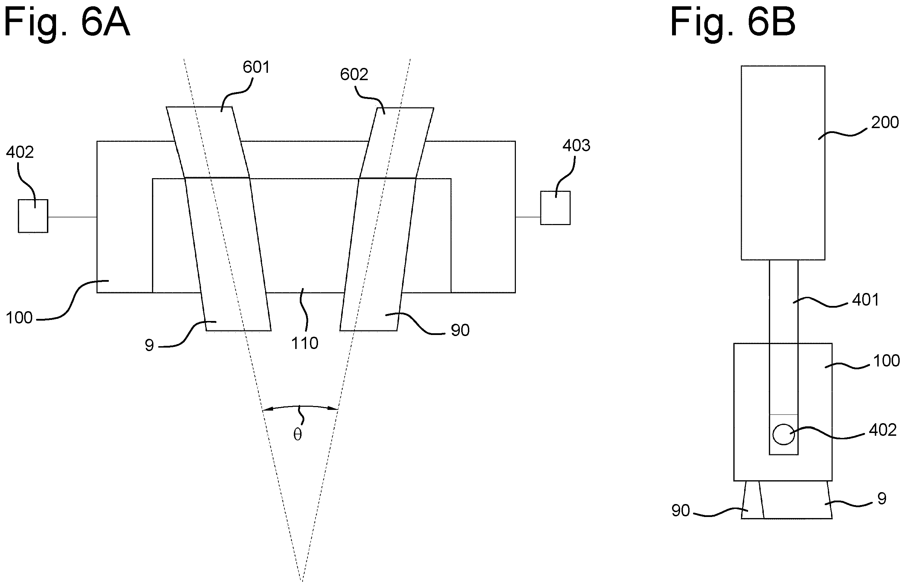

In Figure 6a and 6b, the two welding torches may be orientated at a fixed angle apart from each other in the distal part 100 of the welding torch assembly 2 in Figure 4. This assembly allows for different configurations of welding operations to be performed by the welding torches, while maintaining a melting path.

Figure 6a shows a welding torch holder comprising two welding torches 9, 90 at different angles. The wire feeding units 601, 602 on the distal part 100 feed the wires supplied from the wire feeder in the proximal part 200. As shown in Figure 3, the channels inside the welding torches feed the wires to the welding area. In addition to the welding torches 9, 90, the wire feeding units 601, 602 may also be at an angle to each other. This allows for the wires, being fed to the welding torches, to run in a linear path (at an angle) in the distal part 100. The wires will be angled in the space between the distal part and the proximal part. When the two welding torches are angled towards one another, the paths of the electrode wires intersect at an angle theta (θ) as shown in Figure 6a.

Figure 6b shows a side view of Figure 6a. According to an embodiment of the present invention, not only are the welding torches 9, 90 at an angle with respect to the face of the welding torch holder, but also at an angle with respect to the vertical axis of the welding torch holder. This allows for two separate welding areas inside the groove.

In an embodiment of the present invention, the two welding torches in the welding torch holder may be orientated in series, i.e. one torch behind the other. This allows for both welding torches to weld the same electrode wire in separate stages. In submerged-arc welding, weld powder is deposited by a weld powder distributor placed before the welding torches. As the two weld torches are aligned and welding the same electrode wire, a problem arises where the first weld torch expends the weld powder first, leaving the second welding torch with little to no weld powder. If the second welding torch is left with little to no weld powder, the melting bath may be contaminated due to outside influences, decreasing weld quality.

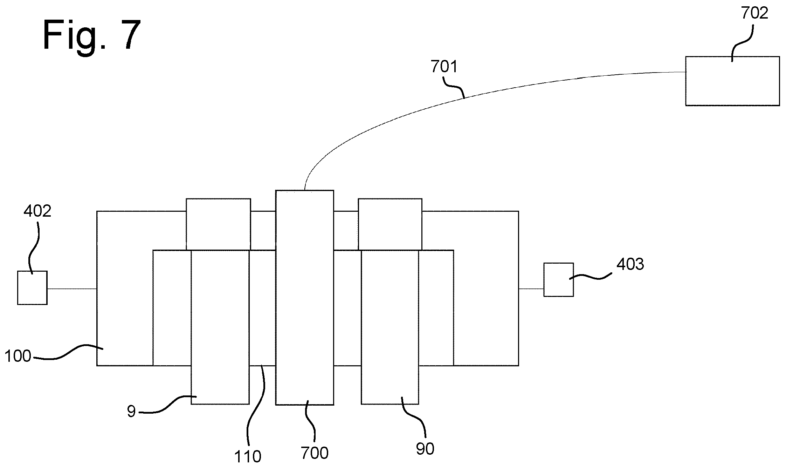

Figure 7 shows an embodiment of the present invention where the weld torch assembly comprises an additional weld powder distributor 700 placed between the two welding torches 9, 90 in the distal part 100, configured to distribute weld powder between the first and second weld torches. By depositing additional weld powder, the second weld torch is able to sufficiently weld the electrode wire. The dosing of the additional weld powder may be fine-tuned depending on the use of weld powder by the respective welding torches.

The weld powder distributor 700 is connected to a powder container 702 via a weld powder transporter 701 that is configured to transport weld powder to the welding powder distributor.

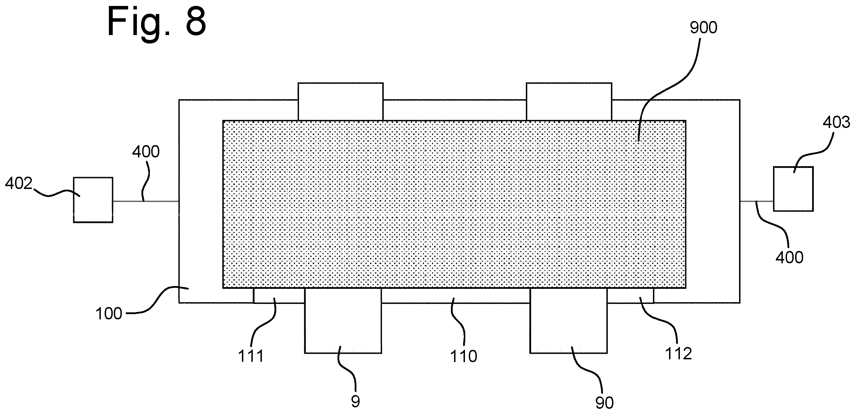

Figure 8 shows the distal part 100 of the welding torch assembly wherein the welding torch holder, the first welding torch and the second welding torch are partially covered with at least one non-magnetic insulation material 900. Due to the large currents that can be fed to the welding torches, it is necessary to prevent a short-circuiting between the first and second welding torches during the operation of the welding torch assembly. This is overcome by introducing non-magnetic insulation material on the surfaces of the distal part of the welding torch assembly where such mutual forces may arise. The non-magnetic insulation material may comprise of more than one piece.

The method of operation of the welding torch assembly is described below using Figures 1 - 8 as reference.

Upon placement of the rolled steel shell 14 on the transport device 15, the welding torch assembly is configured to position the welding torch assembly comprising the distal part in the groove between the edges of the shell. The shell is connected to a grounding terminal. The electrode wire feeders supply the welding torch assembly with electrode wires. The electrode wires pass through the proximal part of the welding torch assembly which is fixed onto the frame 1 to the distal part of the welding torch assembly. Power sources connected to the welding torches apply a current to the welding torch to create a melting path of the electrode wires, resulting in a weld layer within the groove. The distal part is then repositioned to another region of the groove, and performs a weld process to produce a layer that is stacked (and overlaps) above the previous layer.

When two welding torches are present in the welding torch assembly, both torches may perform welding on the same melting path. A welding powder distributor is placed to replenish the weld powder inside the groove for the second welding torch, as the welding torch travels along the groove, along the melting path of the weld.

When both torches are configured to be at different angles, the welding process generates two melting paths, resulting in a simultaneously overlapping and stacked layers.

In the description of the figures, the invention has been described with reference to specific embodiments thereof. It will, however, be evident that various modifications and changes may be made thereto without departing from the scope of the invention as summarized in the attached claims.

In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A welding torch assembly (10) for a welding device for narrow-gap welding two metal sheets, the welding torch assembly (10) comprising:
- a frame (2),
- a proximal part (200) coupled to the frame (2), comprising an electrode wire feeder (210, 220),
- a welding torch (9, 90),
- a distal part (100) comprising a welding torch holder (110), the welding torch holder configured to hold the welding torch (9, 90) to the distal part (100) wherein the electrode wire feeder (210, 220) is configured to feed two or more electrode wires to the welding torch through the welding torch holder (110), and the welding torch (9, 90) is configured to weld the groove (13), connecting the two metal sheets, when a current is applied through at least some of the two or more electrode wires fed to the welding torch (9, 90),
- **characterized in that** the welding torch assembly (10) further comprises:
- a hinge (402) for moveably coupling the distal part (100) to the proximal part (200), and
- an actuator (300) coupled to the distal part (100) and the proximal part (200) configured to move the distal part (100) of the welding torch assembly (10) with respect to the proximal part (200),
- a controller (310) arranged to control the actuator (300) to move the distal part (100) in a groove (13) through the two metal sheets

2. The welding torch assembly (10) according to claim 1, wherein the proximal part (200) comprises a connecting bar and the distal part (100) comprises an axial thread, wherein the hinge (402) comprises a barrel section mounted on the connecting bar and a pivot configured to rotate the axial thread

3. The welding torch assembly (10) according to any of the preceding claims, wherein the welding torch holder (110) is further configure to hold a second welding torch (9 ,90) to the distal part (100), the electrode wire feeder is further configured to feed two or more electrode wires to the second welding torch (9, 90) through the welding torch holder (110), and the second welding torch (9, 90) is configured to weld the groove (13), connecting the two metal sheets, when a current is applied through at least some of the two or more electrode wires of the second welding torch (9, 90).

4. The welding torch assembly (10) according to claim 3, wherein the welding torch holder (110) comprises a block-like body for positioning the first and the second welding torches apart by a predetermined distance.

5. The welding torch assembly (10) according to claims 3 or 4, further comprising a welding powder distributor (700), wherein the welding torch holder (110) is further configured to hold the welding powder distributor (700), configured to deposit welding powder, between the first and second welding torches (9, 90).

6. The welding torch assembly (10) according to claim 5, wherein the welding powder distributor (700) is connected to a powder container configured to transport weld powder to the welding powder distributor (700).

7. The welding torch assembly (10) according to any of claims 3 to 6, wherein the first and the second welding torches (9, 90) are coupled onto the welding torch holder (110) at different angles.

8. The welding torch assembly (10) according to any of claims 3 to 7, wherein the welding torch holder (110), the first welding torch (9, 90) and the second welding torch (9, 90) are partially covered with at least one non-magnetic insulation panel.

9. The welding torch assembly (10) according to any of the preceding claims, wherein the welding torch (9, 90) comprises a block-like body provided with two-parallel channels in a longitudinal direction of the block-like body for guiding the electrode wires through the block-like body.

10. The welding torch assembly (10) according to claim 10, wherein the welding torch (9, 90) further comprises means for exerting a pressing force onto the two parallel channels and an electrically insulating layer and wherein the means for exerting a pressing force onto the two parallel channels and the electrically insulating layer are provided as a single piece.

11. A welding device comprising a welding torch assembly (10) according to any of the claims 1 - 10.

12. Method for welding using a welding torch assembly (10) according to any of the claims 1-10 or a welding device according to claim 11.

13. The method according to claim 12, wherein the welding torch assembly (10) is according to any of claims 3 to 10, and wherein the first and the second welding torches (9, 90) are aligned in series.

14. The method according to claim 12 or 13, wherein the welding torch assembly (10) is according to any of claims 3 to 10, and wherein an alternating current, AC, is applied to the first welding torch (9, 90), and a direct current, DC is applied to the second welding torch (9, 90).

## Patentansprüche

1. Schweißbrenneranordnung (10) für eine Schweißvorrichtung zum Engspaltschweißen von zwei Metallblechen, wobei die Schweißbrenneranordnung (10) Folgendes umfasst:
- einen Rahmen (2),
- einen proximalen Teil (200), der mit dem Rahmen (2) gekoppelt ist und eine Elektrodendrahtzuführung (210, 220) umfasst,
- einen Schweißbrenner (9, 90),
- einen distalen Teil (100), der einen Schweißbrennerhalter (110) umfasst, wobei der Schweißbrennerhalter so konfiguriert ist, dass er den Schweißbrenner (9, 90) an dem distalen Teil (100) hält,
wobei die Elektrodendrahtzuführung (210, 220) so konfiguriert ist, dass sie zwei oder mehr Elektrodendrähte durch den Schweißbrennerhalter (110) zu dem Schweißbrenner führt, und der Schweißbrenner (9, 90) so konfiguriert ist, dass er die Nut (13) schweißt und so die beiden Metallbleche verbindet, wenn ein Strom durch mindestens einige der zwei oder mehr Elektrodendrähte angelegt wird, die dem Schweißbrenner (9, 90) zugeführt werden,
- **dadurch gekennzeichnet, dass** die Schweißbrenneranordnung (10) ferner Folgendes umfasst:
- ein Scharnier (402) zum beweglichen Koppeln des distalen Teils (100) mit dem proximalen Teil (200), und
- einen Aktuator (300), der mit dem distalen Teil (100) und dem proximalen Teil (200) gekoppelt ist und so konfiguriert ist, dass er den distalen Teil (100) der Schweißbrenneranordnung (10) in Bezug auf den proximalen Teil (200) bewegt,
- eine Steuerung (310), die so angeordnet ist, dass sie den Aktuator (300) steuert, um den distalen Teil (100) in einer Nut (13) durch die beiden Metallbleche zu bewegen.

2. Schweißbrenneranordnung (10) nach Anspruch 1, wobei
der proximale Teil (200) eine Verbindungsstange umfasst und der distale Teil (100) ein axiales Gewinde umfasst, wobei das Scharnier (402) einen auf der Verbindungsstange montierten Zylinderabschnitt und einen Drehpunkt umfasst, der so konfiguriert ist, dass er das axiale Gewinde dreht.

3. Schweißbrenneranordnung (10) nach einem der vorhergehenden Ansprüche, wobei der Schweißbrennerhalter (110) ferner so konfiguriert ist, dass er einen zweiten Schweißbrenner (9, 90) an dem distalen Teil (100) hält, die Elektrodendrahtzuführung ferner so konfiguriert ist, dass sie zwei oder mehr Elektrodendrähte durch den Schweißbrennerhalter (110) zu dem zweiten Schweißbrenner (9, 90) führt, und der zweite Schweißbrenner (9, 90) so konfiguriert ist, dass er die Nut (13) schweißt, wodurch die beiden Metallbleche verbunden werden, wenn ein Strom durch mindestens einige der zwei oder mehr Elektrodendrähte des zweiten Schweißbrenners (9, 90) angelegt wird.

4. Schweißbrenneranordnung (10) nach Anspruch 3, wobei der Schweißbrennerhalter (110) einen blockartigen Körper zum Positionieren des ersten und des zweiten Schweißbrenners in einem vorbestimmten Abstand umfasst.

5. Schweißbrenneranordnung (10) nach Anspruch 3 oder 4, die ferner einen Schweißpulververteiler (700) umfasst, wobei der Schweißbrennerhalter (110) ferner so konfiguriert ist, dass er den Schweißpulververteiler (700), der zum Abscheiden von Schweißpulver konfiguriert ist, zwischen dem ersten und zweiten Schweißbrenner (9, 90) hält.

6. Schweißbrenneranordnung (10) nach Anspruch 5, wobei der Schweißpulververteiler (700) mit einem Pulverbehälter verbunden ist, der zum Transportieren von Schweißpulver zu dem Schweißpulververteiler (700) konfiguriert ist.

7. Schweißbrenneranordnung (10) nach einem der Ansprüche 3 bis 6, wobei der erste und der zweite Schweißbrenner (9, 90) in unterschiedlichen Winkeln an den Schweißbrennerhalter (110) gekoppelt sind.

8. Schweißbrenneranordnung (10) nach einem der Ansprüche 3 bis 7, wobei der Schweißbrennerhalter (110), der erste Schweißbrenner (9, 90) und der zweite Schweißbrenner (9, 90) teilweise mit mindestens einer nichtmagnetischen Isolierplatte abgedeckt sind.

9. Schweißbrenneranordnung (10) nach einem der vorhergehenden Ansprüche, wobei der Schweißbrenner (9, 90) einen blockartigen Körper umfasst, der mit zwei parallelen Kanälen in Längsrichtung des blockartigen Körpers versehen ist, um die Elektrodendrähte durch den blockartigen Körper zu führen.

10. Schweißbrenneranordnung (10) nach Anspruch 10, wobei der Schweißbrenner (9, 90) ferner Mittel zum Ausüben einer Druckkraft auf die beiden parallelen Kanäle und eine elektrisch isolierende Schicht umfasst und wobei die Mittel zum Ausüben einer Druckkraft auf die beiden parallelen Kanäle und die elektrisch isolierende Schicht einstückig vorgesehen sind.

11. Schweißvorrichtung, die eine Schweißbrenneranordnung (10) nach einem der Ansprüche 1 - 10 umfasst.

12. Verfahren zum Schweißen unter Verwendung einer Schweißbrenneranordnung (10) nach einem der Ansprüche 1-10 oder einer Schweißvorrichtung nach Anspruch 11.

13. Verfahren nach Anspruch 12, wobei die Schweißbrenneranordnung (10) einem der Ansprüche 3 bis 10 entspricht und wobei der erste und der zweite Schweißbrenner (9, 90) in Reihe ausgerichtet sind.

14. Verfahren nach Anspruch 12 oder 13, wobei die Schweißbrenneranordnung (10) einem der Ansprüche 3 bis 10 entspricht und wobei ein Wechselstrom, AC, an den ersten Schweißbrenner (9, 90) und ein Gleichstrom, DC, an den zweiten Schweißbrenner (9, 90) angelegt wird.

## Revendications

1. Ensemble de chalumeau soudeur (10) pour un dispositif de soudage destiné au soudage à écartement resserré de deux tôles métalliques, l'ensemble de chalumeau soudeur (10) comprenant :
- un châssis (2),
- une partie proximale (200) couplée au châssis (2), comprenant un dévidoir d'électrode (210, 220),
- un chalumeau soudeur (9, 90),
- une partie distale (100) comprenant un support de chalumeau soudeur (110), le support de chalumeau soudeur étant configuré pour maintenir le chalumeau soudeur (9, 90) sur la partie distale (100) où le dévidoir d'électrode (210, 220) est configuré pour alimenter deux ou plusieurs fils d'électrode au chalumeau soudeur à travers le support de chalumeau soudeur (110), et le chalumeau soudeur (9, 90) est configuré pour souder la rainure (13), reliant les deux tôles métalliques, lorsqu'un courant est appliqué à travers au moins certains des deux ou plusieurs fils d'électrode alimentés au chalumeau soudeur (9, 90),
- **caractérisé en ce que** l'ensemble de chalumeau soudeur (10) comprend en outre :
- une charnière (402) pour coupler de manière mobile la partie distale (100) à la partie proximale (200), et
- un actionneur (300) couplé à la partie distale (100) et à la partie proximale (200) configuré pour déplacer la partie distale (100) de l'ensemble de chalumeau soudeur (10) par rapport à la partie proximale (200),
- un contrôleur (310) agencé pour commander à l'actionneur (300) de déplacer la partie distale (100) dans une rainure (13) à travers les deux tôles métalliques

2. Ensemble de chalumeau soudeur (10) selon la revendication 1, où la partie proximale (200) comprend une barre de connexion et la partie distale (100) comprend un filetage axial, où la charnière (402) comprend une section cylindrique montée sur la barre de connexion et un pivot configuré pour faire tourner le filetage axial

3. Ensemble de chalumeau soudeur (10) selon l'une quelconque des revendications précédentes, où le support de chalumeau soudeur (110) est en outre configuré pour maintenir un deuxième chalumeau soudeur (9 ,90) sur la partie distale (100), le dévidoir d'électrode est en outre configuré pour alimenter deux ou plusieurs fils d'électrode au deuxième chalumeau soudeur (9, 90) à travers le support de chalumeau soudeur (110), et la deuxième chalumeau soudeur (9, 90) est configuré pour souder la rainure (13), reliant les deux tôles métalliques, lorsqu'un courant est appliqué à travers au moins certains des deux ou plusieurs fils d'électrode du deuxième chalumeau soudeur (9, 90).

4. Ensemble de chalumeau soudeur (10) selon la revendication 3, où le support de chalumeau soudeur (110) comprend un corps en forme de bloc pour positionner le premier et le deuxième chalumeau soudeur à une distance prédéterminée l'un de l'autre.

5. Ensemble de chalumeau soudeur (10) selon les revendications 3 ou 4, comprenant en outre un distributeur de poudre de soudage (700), où le support de chalumeau soudeur (110) est en outre configuré pour maintenir le distributeur de poudre de soudage (700), configuré pour déposer de la poudre de soudage, entre le premier et le deuxième chalumeau soudeur (9, 90).

6. Ensemble de chalumeau soudeur (10) selon la revendication 5, où le distributeur de poudre de soudage (700) est relié à un conteneur de poudre configuré pour transporter la poudre de soudage vers le distributeur de poudre de soudage (700).

7. Ensemble de chalumeau soudeur (10) selon l'une quelconque des revendications 3 à 6, où le premier et le deuxième chalumeau soudeur (9, 90) sont couplés au support de chalumeau soudeur (110) selon des angles différents.

8. Ensemble de chalumeau soudeur (10) selon l'une quelconque des revendications 3 à 7, où le support de chalumeau soudeur (110), le premier chalumeau soudeur (9, 90) et le deuxième chalumeau soudeur (9, 90) sont partiellement recouverts d'au moins un panneau isolant non magnétique.

9. Ensemble de chalumeau soudeur (10) selon l'une quelconque des revendications précédentes, où le chalumeau soudeur (9, 90) comprend un corps en forme de bloc pourvu de deux canaux parallèles dans une direction longitudinale du corps en forme de bloc pour guider les fils d'électrode à travers le corps en forme de bloc.

10. Ensemble de chalumeau soudeur (10) selon la revendication 10, où le chalumeau soudeur (9, 90) comprend en outre des moyens pour exercer une force de pression sur les deux canaux parallèles et une couche électriquement isolante, et où les moyens pour exercer une force de pression sur les deux canaux parallèles et la couche électriquement isolante sont fournis comme une seule pièce.

11. Dispositif de soudage comprenant un ensemble de chalumeau soudeur (10) selon l'une quelconque des revendications 1 à 10.

12. Procédé de soudage utilisant un ensemble de chalumeau soudeur (10) selon l'une quelconque des revendications 1 à 10 ou un dispositif de soudage selon la revendication 11.

13. Procédé selon la revendication 12, où l'ensemble de chalumeau soudeur (10) est conforme à l'une quelconque des revendications 3 à 10, et où le premier et le deuxième chalumeau soudeur (9, 90) sont alignés en série.

14. Procédé selon la revendication 12 ou 13, où l'ensemble de chalumeau soudeur (10) est conforme à l'une quelconque des revendications 3 à 10, et où un courant alternatif, CA, est appliqué au premier chalumeau soudeur (9, 90), et un courant continu, CC, est appliqué au deuxième chalumeau soudeur (9, 90).
